# DEMANDE DE BREVET EUROPEEN

(11) **EP 0 806 611 A1**
(43) Date de publication de la demande: **12.11.1997**
(21) Numéro de dépôt: 97401023.3
(22) Date de dépôt: 07.05.1997
(51) Int. Cl.: F23R 3/26

(54) **Systéme d'injection à geometrie variable adoptant un debit d'air en fonction du regime moteur**

(30) Priorité: 09.05.1996 FR 9605764
(71) Demandeur: SOCIETE NATIONALE D'ETUDE ET DE CONSTRUCTION DE MOTEURS D'AVIATION Snecma, F-75015 Paris (FR)
(72) Inventeur: Ciccia, Patrick, Samuel, André, 75020 - Paris (FR); Le Texier, Michel, François, 91860 - Epinay Sous Senart (FR)

(57) **Abrégé**

L'invention concerne un système d'injection à géométrie variable adoptant un débit d'air en fonction du régime moteur. Le réglage du débit d'air fourni par la vrille interne (7) associé à l'embout (4) de l'injecteur de carburant alimenté par un tube d'arrivée (3) est assuré par un obturateur (14) monté mobile axialement et porté par des soufflets (20, 21, 23) le reliant au tube d'arrivée (3) et à l'embout (4). La pression P1 du carburant dans la conduite d'arrivée agit sur les soufflets (20, 21, 23) pour déplacer axialement l'obturateur (14) entre une position d'obturation des orifices de la vrille (7) à bas régime et une position d'ouverture maximale à haut régime.

## Description

La présente invention a pour objet un brûleur pour chambre de combustion d'un moteur de turbine à gaz comportant un dispositif d'injection de carburant fixé dans le fond de la chambre, et alimenté en carburant par au moins un tube d'arrivée de carburant, une vrille intérieure associée audit dispositif d'injection de carburant et destinée à fournir de l'air primaire participant à la combustion du carburant injecté, des moyens de réglage du débit d'air fourni par la vrille intérieure et des moyens de commande des moyens de réglage agissant en fonction du régime du moteur.

Les turbomachines actuelles et surtout futures qui équiperont les avions civils et militaires devront être les moins polluantes possible. Elles devront émettre un minimum de dioxyde de carbone et d'oxydes d'azote, tant durant le décollage et la montée en altitude que pendant la période de croisière. Cest ainsi que les dispositifs d'injection de carburant et de comburant et la chambre de combustion doivent être optimisés. De plus, dans le cas des avions à usage militaire, les émissions de fumée doivent être extrêmement réduites et si possible inexistantes, car la discrétion est un paramètre très important.

Dans la zone primaire d'une chambre de combustion, les débits d'air et de carburant évoluent fortement en fonction des régimes de rotation et des conditions d'alimentation; et les écarts de richesse air/carburant sont importants entre les régimes de ralenti et de plein gaz.

Au régime de ralenti, le mélange air/carburant est pauvre, ce qui est préjudiciable au niveau de la pollution surtout en dioxyde de carbone. A ce point de fonctionnement, les valeurs du débit d'air, de la pression, de la température et des richesses air/carburant sont relativement faibles, ce qui entraîne des vitesses de réactions lentes. Cest pourquoi aux faibles régimes il faut limiter le débit d'air pour enrichir la zone primaire de la chambre de combustion. Il faut en outre obtenir une nappe de carburant très étendue afin d'augmenter le temps de séjour des gaz de combustion dans la chambre.

Au régime du plein gaz, le mélange air/carburant est riche. Cette situation entraîne une élévation du niveau de pollution par émission de fumée et d'oxydes d'azote. A ce régime, il faut augmenter le débit d'air primaire dans la chambre de combustion pour appauvrir la zone primaire et diminuer le temps de séjour des gaz afin de limiter les émissions d'oxydes d'azote.

Cest pourquoi on a recours à la modulation du débit d'air au niveau des systèmes d'injection de carburant en fonction du régime du moteur.

FR-A-2 270 448 décrit une chambre de combustion, dans laquelle une membrane portée par des soufflets ferme hermétiquement l'admission d'air à l'entrée de la couronne d'aubages de la vrille. Plus le régime moteur augmente plus la pression de l'air en entrée croît. Cela a pour effet de faire reculer la membrane de façon à ouvrir les admissions d'air. Il est à noter que dans la chambre décrite dans ce document l'air frais issu du compresseur est fourni à contre courant du flux des gaz de combustion.

Dans FR-A-2 661 714 et FR-A-2 676 529, les moyens de réglage des vrilles comportent des couronnes pivotantes commandées ensemble soit mécaniquement par cames, soit par la pression du fluide de la chambre de combustion.

Le but de la présente invention est de proposer un brûleur du type mentionné ci-dessus dont les moyens de réglage sont stables aux faibles régimes et aux régimes élevés et dont les moyens de commande agissent en fonction de la pression d'alimentation du carburant dudit brûleur indépendamment des autres brûleurs pouvant équiper la chambre de combustion.

Le brûleur selon la présente invention est caractérisé par le fait que les moyens de réglage du débit d'air comportent un obturateur mobile axialement entre une position d'obturation de la vrille intérieure à bas régime et une position d'ouverture maximale à haut régime, ledit obturateur étant porté par des soufflets élastiques qui le relient au tube d'arrivée de carburant, d'une part, et au dispositif d'injection de carburant, d'autre part, et qui assurent la continuité du circuit de carburant entre le tube d'arrivée et le dispositif d'injection, et par le fait que les moyens de commande des moyens de réglage sont constitués par les déformations élastiques desdits soufflets sous l'action de la pression du carburant fourni par le tube d'arrivée.

Chaque obturateur est ainsi stable, à la fois pour les régimes très bas et pour les régimes très élevés. Chaque système d'injection ou brûleur est un module à part entière, indépendant des autres modules de la chambre de combustion, et pouvant être réglé dans sa plage de fonctionnement de façon autonome. Le réglage de chaque module peut être réalisé hors chambre de combustion ou hors moteur, offrant ainsi une possibilité de rechange sur moteur sans affectation des autres systèmes d'injection du foyer de combustion.

De plus la mise au point et la validation d'un tel brûleur pour une chambre de combustion annulaire peuvent être réalisées sur un foyer tubulaire.

D'autres avantages et caractéristiques de l'invention ressortiront à la lecture de la description suivante faite à titre d'exemple et en référence aux dessins annexés dans lesquels :
- la figure 1 montre un brûleur comportant un seul circuit de carburant et équipé de moyens de réglage et de moyens de commande du débit d'air selon la présente invention;
- la figure 2 montre un brûleur du type aéromécanique à double débit de carburant, conforme à l'invention, dans la position de fonctionnement au ralenti;
- la figure 3 représente le brûleur de la figure 2 dans la position de fonctionnement au plein gaz.

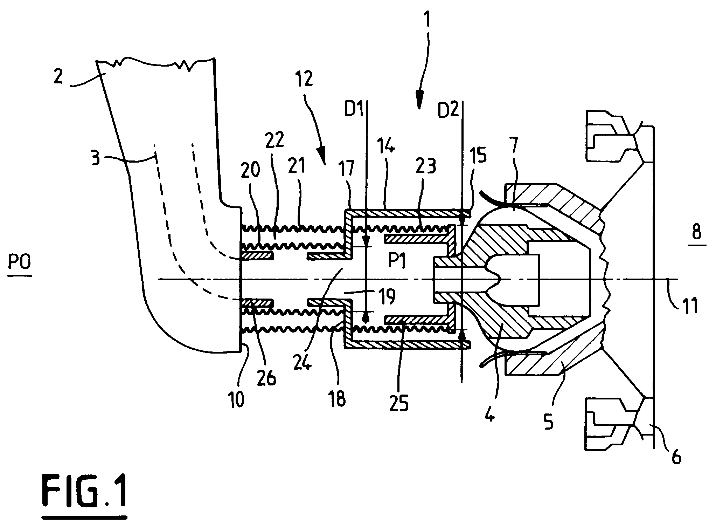

Sur la figure 1, on a représenté par la référence 1 un brûleur équipant une chambre de combustion d'un moteur de turbine à gaz. Ce brûleur 1 comporte un corps 2 fixé au carter du moteur, non représenté sur le dessin, et dans lequel est disposé un tube d'arrivée 3 du carburant, un dispositif d'injection de carburant 4 ou embout centré dans un pot 5 fixé dans le fond 6 de la chambre de combustion, une vrille intérieure 7 associée à l'embout 4 et destinée à fournir un débit d'air primaire tourbillonnant qui participe au cisaillement et à la pulvérisation de la nappe de carburant délivrée par l'embout 4, et à la combustion de ce carburant, dans la zone de combustion 8 de la chambre de combustion.

L'embout 4 est disposé à distance du corps 2. Comme on le voit sur la figure 1, entre la face aval 10 du corps 2, perpendiculaire à l'axe 11 de l'embout 4, et cet embout 4, est monté un ensemble 12 qui assure trois fonctions : la continuité du circuit de carburant entre le tube d'arrivée de carburant 3 et l'embout 4, le réglage de l'ouverture des orifices 13 de la vrille intérieure 7, et la commande du réglage de l'ouverture de ces orifices en fonction de la pression P1 du carburant délivré par le tube d'arrivée 3.

Cet ensemble 12 comporte essentiellement un obturateur 14 cylindrique d'axe 11 dont le bord aval 15 est situé en regard des orifices 13 de la vrille intérieure 7 et dont le bord amont 17 est fixé à la périphérie d'un disque 18 perpendiculaire à l'axe 11 et présentant un orifice central 19 pour le passage du carburant. Le disque 18 est disposé entre la face aval 10 du corps 2 et l'embout 4. Il est relié à la face aval 10 par deux soufflets coaxiaux 20, 21 délimitant une chambre annulaire étanche 22, et à l'embout 4 par un soufflet 23. Les soufflets 20, 21 et 23 sont métalliques et déformables sous l'action de la pression P1. Les soufflets 20 et 23 assurent la continuité du circuit de carburant entre le tube d'arrivée de carburant 3 et l'embout 4, et délimitent une enceinte 24 dans laquelle agit la pression P1 du carburant dans l'injecteur.

Le diamètre D2 du soufflet 23 est supérieure au diamètre D1 du soufflet 21. L'effort F produit par la pression P1 sur le disque 18 est dirigé vers l'amont et est égal à πP1 (D2² - D1¹).

On conçoit ainsi qu'une augmentation de la pression P1 entraîne un déplacement de l'obturateur 14 vers le corps 2.

Les références 25 et 26 représentent des butées portées respectivement par l'embout 4 et le corps 2, et qui servent, d'une part, à limiter le déplacement de l'obturateur 14 entre une position d'obturation des orifices 13 de la vrille intérieure 7 dans laquelle le disque 18 est en appui sur la butée 25, et une position d'ouverture maximale dans laquelle le disque 18 est en appui sur la butée 26, et d'autre part, à autoriser un positionnement intermédiaire du disque 18 lorsque la pression P1 du carburant est comprise entre deux valeurs prédéterminées, intermédiaires entre la pression réduite du carburant au régime de ralenti du moteur et la pression maximale du carburant au régime plein gaz.

Le positionnement de l'obturateur 14 est ainsi stable aux bas régimes et aux régimes élevés.

Lorsque le moteur fonctionne au ralenti, le débit de carburant délivré par le régulateur est faible, et son niveau de pression est réduit. La force F produite sur l'ensemble des soufflets 20, 21, 23 est faible. Dans ces conditions le disque 18 est en appui sur la butée 25, l'obturateur est dans la position d'obturation, et le débit d'air injecté dans la zone de combustion 8 par la vrille intérieure 7 est limité, ce qui augmente la richesse du mélange.

Lorsque le moteur fonctionne au plein gaz, la pression et le débit de carburant sont élevés. La force F exercée sur le disque 18 par la pression P1 du carburant est élevée. Le disque 18 est en appui par la butée 26 sur la face aval 10 du corps 2, et l'obturateur 14 est dans la position d'ouverture maximale des orifices 13 de la vrille intérieure 7, ce qui permet d'augmenter le débit d'air dans la zone de combustion 8 et d'appauvrir le mélange.

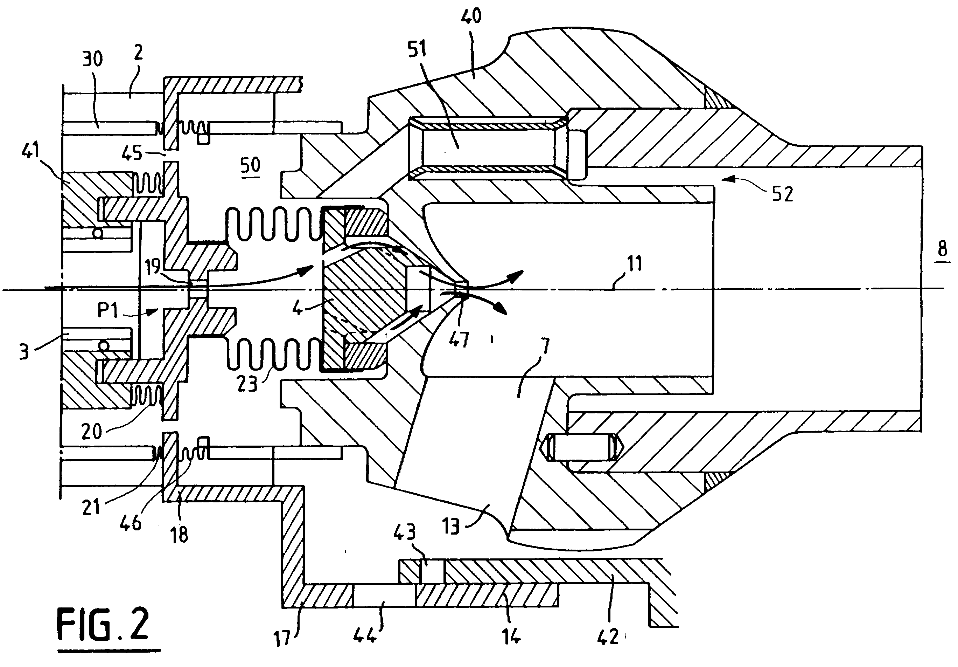

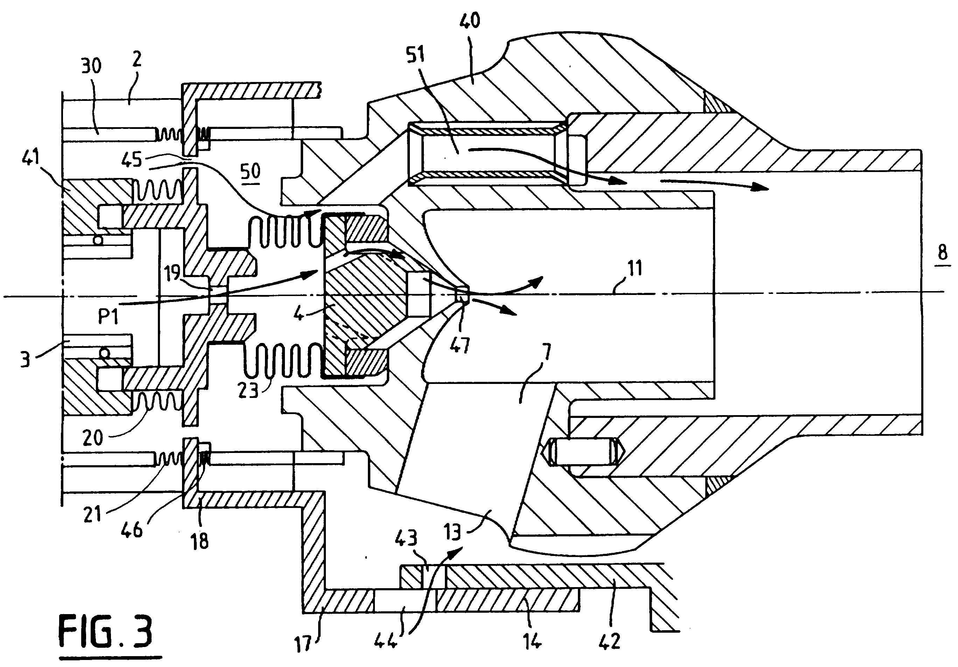

Les figures 2 et 3 montrent une variante de réalisation de l'invention adaptée à un injecteur de carburant 1 du type aérodynamique à double débit. On utilisera les mêmes références pour désigner les éléments semblables.

L'injecteur 1, ici concerné, possède deux circuits de carburant, entièrement séparés, l'un pour le fonctionnement au régime de ralenti, l'autre pour le fonctionnement au régime plein gaz.

Le premier circuit de carburant comporte un tube d'arrivée de carburant 3 disposé dans le corps 2 et débouchant dans l'axe 11 d'un embout 4 de type mécanique situé en aval de l'orifice du tube d'arrivée 3.

Le deuxième circuit de carburant comporte un deuxième tube d'arrivée 30 coaxial au tube 3 et entourant ce dernier et des passages 51 ménagés dans un deuxième embout 40 de type aérodynamique entourant l'embout 4. Une vrille intérieure 7 est ménagée dans ce deuxième embout 40. Un support 41 est prévu dans le corps 2 entre le tube intérieure 3 et le deuxième tube d'arrivée 30. La référence 42 représente une douille du fond de chambre qui présente des orifices 43 en regard des orifices 13 de la vrille intérieure 7.

Un obturateur cylindrique 14 est monté coulissant sur la douille 42. Cet obturateur 14 comporte des lumières 44 susceptibles d'être positionnées en regard des orifices 43 de la douille 42. L'extrémité amont 17 de l'obturateur 14 est fixé à la périphérie d'un disque ou fourreau 18 qui présente un orifice central 19 pour le passage du carburant du premier circuit et des orifices 45 décentrés pour le passage du carburant du deuxième circuit. La douille 42 est centrée sur l'embout 40 et ce dernier est lié de façon permanente avec le corps 2.

Le fourreau 18 est relié au corps 2 par deux premiers soufflets élastiques 20, 21 coaxiaux qui délimitent le passage du carburant du deuxième circuit et aux embouts 4 et 40 respectivement par deux deuxièmes soufflets élastiques 23 et 46.

Lorsque le moteur fonctionne au ralenti, le fourreau 18 est en butée sur le support 41. L'injecteur n'envoie du carburant que par le tube d'arrivée central 3. Le débit de carburant qui alimente l'embout 4 est à un bas niveau de pression. Il arrive par le tube 3, traverse l'orifice central 19 du fourreau 18, avant de venir alimenter la vrille de carburant de l'embout 4 et l'orifice d'injection 47.

Les soufflets intérieurs 20 et 23 délimitent ce premier circuit de carburant entre le tube d'arrivée 3 et l'embout 4. Au ralenti l'effort produit par la pression du carburant sur la face amont du disque 18 n'est pas suffisante pour déformer les soufflets 20, 21, 23 et 46.

Dans le fonctionnement au ralenti, ainsi qu'on le voit sur la figure 2, les orifices 43 de la douille 42 sont obturés par l'obturateur 14. Le débit d'air qui traverse cette douille 42 est donc réduit au minimum fonctionnel, ce qui permet de limiter le débit d'air primaire dans la zone de combustion 8 et d'augmenter la richesse au ralenti.

Lorsque le moteur fonctionne au plein gaz, le niveau de pression du carburant s'élève dans le circuit de ralenti et il est suffisant pour déplacer vers l'aval le fourreau 18 en déformant les soufflets 20, 21, 23 et 46.

Le deuxième circuit de carburant, de type aérodynamique, est alimenté en carburant par le deuxième tube 30. Ce carburant traverse le fourreau 18 par les orifices 45, et atteint la chambre 50 délimité par les soufflets 23 et 46. Il emprunte ensuite les passages 51 du deuxième embout 40 et alimente la fente annulaire 52. Ce déplacement vers l'aval du fourreau 18 et par conséquent de l'obturateur 14, permet aux lumières 44 de venir se placer en face des orifices 43 de la douille 42. Un débit d'air primaire supplémentaire va ainsi alimenter la zone de combustion 8 de la chambre, et appauvrir le mélange.

Les positionnements et les diamètres des quatre soufflets 20, 21, 23 et 46 sont établis de telle manière que les deux circuits de carburant sont isolés et que les pressions du carburant agissent sur les soufflets et le disque 18 de la manière indiquée ci-dessus.

## Revendications

1. Brûleur pour chambre de combustion d'un moteur de turbine à gaz comportant un dispositif d'injection de carburant (4) disposé dans le fond de chambre (6) et alimenté en carburant par au moins un tube d'arrivée (3) de carburant, une vrille intérieure (7) associée audit dispositif d'injection de carburant (4) et destiné à fournir de l'air primaire participant à la combustion du carburant injecté, des moyens de réglage du débit d'air fourni par la vrille intérieure (7) et des moyens de commande des moyens de réglage agissant en fonction du régime du moteur,
caractérisé par le fait que les moyens de réglage du débit d'air comportent un obturateur (14) mobile axialement entre une position d'obturation de la vrille intérieure (7) à bas régime et une position d'ouverture maximale à haut régime, ledit obturateur (14) étant porté par des soufflets élastiques (20, 21, 23, 46) qui le relient au tube d'arrivée de carburant (3), d'une part, et au dispositif d'injection de carburant (4), d'autre part, et qui assurent la continuité du circuit de carburant entre le tube d'arrivée (3) et le dispositif d'injection (4), fixe par rapport au fond de chambre, et par le fait que les moyens de commande des moyens de réglage sont constitués par les déformations élastiques desdits soufflets (20, 21, 23, 46) sous l'action de la pression non pilotée P1 du carburant fourni par le tube d'arrivée (3).

2. Brûleur selon la revendication 1 caractérisé par le fait que l'obturateur (14) est relié au tube d'arrivée (3) de carburant par deux soufflets (20, 21) coaxiaux délimitant une chambre étanche (22), et au dispositif d'injection de carburant (4) par un soufflet (23).

3. Brûleur selon la revendication 2, caractérisé par le fait que le déplacement axial de l'obturateur est limité dans les deux sens par des butées (25, 26).

4. Brûleur selon la revendication 1 comportant deux circuits de carburant coaxiaux alimentés par des tubes d'arrivée de carburants coaxiaux (3, 30), caractérisé par le fait que l'obturateur est relié aux tubes d'arrivée (3, 30) de carburant par deux premiers soufflets (20, 21) coaxiaux et au dispositif d'injection de carburant (4, 40) par deux deuxièmes soufflets (23, 46) coaxiaux délimitant les deux circuits de carburant, et présente des orifices (19, 45) pour le passage du carburant dans chacun des circuits.
